# EUROPÄISCHE PATENTSCHRIFT

(11) **EP 2 667 037 B1**
(45) Veröffentlichungstag und Bekanntmachung des Hinweises auf die Patenterteilung: **12.09.2018**
(21) Anmeldenummer: 12003994.6
(22) Anmeldetag: 22.05.2012
(51) Int. Cl.: F15B 11/024, F15B 11/046, B62D 33/067

(54) **Hydraulische Kippvorrichtung**
Hydraulic tilting device
Dispositif d'inclinaison hydraulique

(43) Veröffentlichungstag der Anmeldung: 27.11.2013
(73) Patentinhaber: Weber-Hydraulik GmbH, 74363 Güglingen (DE)
(72) Erfinder: Müller, Benedikt, Dr., 67368 Westheim (DE)
(74) Vertreter: Lemcke, Brommer & Partner Patentanwälte Partnerschaft mbB

(56) Entgegenhaltungen:
- WO-A1-2006/115407
- DE-A1- 19 710 949
- DE-A1- 19 730 499
- DE-U1-202009 006 313

## Beschreibung

Die Erfindung betrifft eine gattungsgemässe Kippvorrichtung nach dem Oberbegriff des Hauptanspruchs, nämlich eine hydraulische Kippvorrichtung zum Kippen des Fahrerhauses eines Lastkraftwagens in eine gekippte Montagestellung und zum Zurückkippen in die Fahrstellung, mit einer Pumpe, mit einem Druckmittelbehälter für die Hydraulikflüssigkeit, mit einem doppelt wirkenden Hubzylinder, dessen Kolben und Zylindergehäuse jeweils mit dem Fahrerhaus bzw. mit dem Fahrgestell des Lastkraftwagens verbindbar sind, mit zumindest einem Steuerventil, durch das die beiden durch den Kolben getrennten Zylinderräume des Hubzylinders über Druckmittelleitungen wahlweise an die Pumpe oder an den Druckmittelbehälter anschliessbar sind, wobei die beiden Zylinderräume im Bereich der der Fahrstellung entsprechenden Lage des Kolbens über eine Verbindungsleitung miteinander verbunden sind, deren Mündungen den Bereich des Spiels des Kolbens in der Fahrstellung definieren, und wobei der kolbenseitige Zylinderraum über eine zu diesem hin öffnende, in der ersten Druckmittelleitung eingeschaltete, von der zweiten Druckmittelleitung über eine Drucksteuereinrichtung druckgesteuerte erste Ventileinrichtung mit dem zumindest einen Steuerventil verbunden ist, mit einer zweiten Ventileinrichtung in der Verbindungsleitung, die bei Druckbeaufschlagung über den ersten Zweig der Verbindungsleitung, der mit dem kolbenstangenseitigen Zylinderraum verbunden ist, öffnet und in der Gegenrichtung schliesst, wobei die zweite Ventileinrichtung als erstes Rückschlagventil ausgebildet ist, wobei die erste Ventileinrichtung als Vierwege-Zweipositionsventil ausgebildet ist, welches in Schliessrichtung mit der Kraft einer Feder beaufschlagt ist und neben der Drucksteuereinrichtung zwei weitere Drucksteuereinrichtungen zum Öffnen und eine dritte Drucksteuereinrichtung zum Schliessen aufweist, wobei die erste Drucksteuereinrichtung mit dem Abschnitt der ersten Druckmittelleitung zwischen der ersten Ventileinrichtung und dem zumindest einen Steuerventil verbunden ist und wobei die zweite Drucksteuereinrichtung mit dem Abschnitt der ersten Druckmittelleitung zwischen der ersten Ventileinrichtung und dem kolbenseitigen Zylinderraum und die weitere dritte Drucksteuereinrichtung mit dem zweiten Zweig der Verbindungsleitung zum kolbenstangenseitigen Zylinderraum verbunden ist.

Eine solche gattungsgemässe hydraulische Kippvorrichtung zum Kippen des Fahrerhauses eines Lastkraftwagens mit zusätzlichem hydraulischem Schwinghub im Fahrbetrieb ist bekannt (DE 197 30 499 A1) und hat sich bewährt. Diese weisen mit Vorteil zwar ein geringeres Druckniveau bzw. grosse Verstellkräfte auf; nachteilig bei diesen bekannten Kippvorrichtungen ist aber deren vergleichsweise geringe Stellgeschwindigkeit.

Der Erfindung liegt deshalb die Aufgabe zugrunde, eine gattungsgemässe Kippvorrichtung nach dem Oberbegriff des Hauptanspruchs mit schnellerer Stellgeschwindigkeit auszustatten.

Diese Aufgabe wird bei einer gattungsgemässen Kippvorrichtung nach dem Oberbegriff des Hauptanspruchs erfindungsgemäss durch dessen kennzeichnende Merkmale also dadurch gelöst, dass in die zweite Druckmittelleitung ein druckgesteuertes Dreiwege-Zweipositionsventil eingeschaltet ist, das in seiner der Fahrstellung entsprechenden Ruhelage die an seinem Eingang anliegende zweite Druckmittelleitung durchschaltet und in seiner der Montagestellung entsprechenden Betriebslage bei Beaufschlagung der ersten Druckmittelleitung mit Druck sowohl die erste Druckmittelleitung mit der zweiten Druckmittelleitung über eine an seinem Ausgang befindliche Anschlussleitung verbindet als auch deren Verbindung zu dem Druckmittelbehälter unterbricht.

Mit der erfindungsgemässen Ausbildung wird eine so genannte Differentialschaltung bewirkt, in der der kolben- und der -stangenseitige Zylinderraum bzw. miteinander und zugleich mit der Pumpe verbunden sind, was zur Folge hat, dass die aus dem kolbenstangenseitigen Zylinderraum verdrängte Hydraulikflüssigkeit dem kolbenseitigen Zylinderraum wieder zugeführt wird. Hierdurch erzielt man bei gleichem Volumenstrom der Pumpe eine höhere Stellgeschwindigkeit, gewissermassen einen Eilgang, muss dafür jedoch ein höheres Druckniveau bzw. eine verringerte verfügbare Kraft in Kauf nehmen.

In bevorzugter Weiterbildung der Erfindung ist bei der Kippvorrichtung an dem Eingang des Dreiwege-Zweipositionsventils ein mit seinem Eingang an die zweite Druckmittelleitung und seinem Ausgang an den Druckmittelbehälter angeschlossenes druckgesteuertes Zweiwege-Zweipositionsventil vorgesehen, das in seiner Ruhelage die Verbindung der zweiten Druckmittelleitung mit dem Druckmittelbehälter unterbricht und in Betriebslage durchschaltet. Somit schaltet das druckgesteuerte Zweiwege-Zweipositionsventil erst bei einem bestimmten Druck in der an die Pumpe angeschlossenen ersten Druckmittelleitung und unterbricht zugleich die Differentialschaltung, bspw. zu einem Zeitpunkt, in welchem kein grosser Volumenfluss mit schnellem Ausfahren der Kolbenstange, sondern eine grössere Kraft beim Kippen des Fahrerhauses erzielt werden kann.

Weitere zweckmässige Ausgestaltungen und Weiterbildungen sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: einen Schaltplan einerer hydraulischen Fahrerhauskippvorrichtung;
- Figur 2: einen Schaltplan für den Anschluss an die Fahrerhauskippvorrichtung nach Fig.1;
- Figur 3: die Schaltung gemäss Fig. 1 mit zusätzlicher Beschaltung.

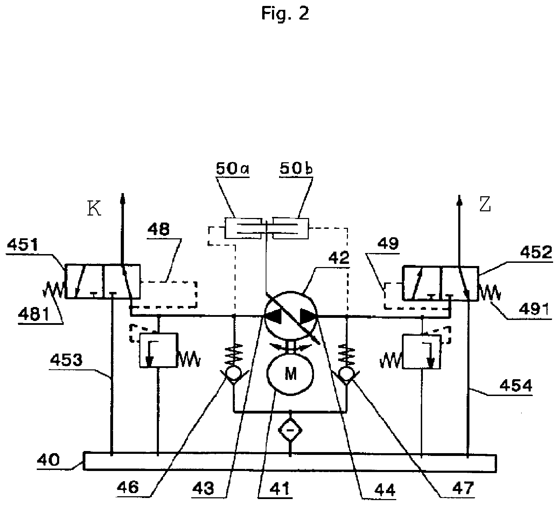

Hydraulische Kippvorrichtungen für Fahrerhäuser von Lastkraftwagen weisen einen doppelt wirkenden Hubzylinder 10 und einen in diesem bewegbar an einer Kolbenstange 12 geführten Kolben 11 auf, der den Zylinder in einen oberen bzw. kolbenstangenseitigen Zylinderraum 13 und einen unteren bzw. kolbenseitigen Zylinderraum 14 trennt. Ferner ist an den Zylinder 10 an den kolbenseitigen Zylinderraum eine erste Druckmittelleitung 20 angeschlossen, die einen Anschluss K (wird in Figur 2 näher beschrieben) aufweist. Am kolbenstangenseitigen Zylinderraum 13 ist eine von einem Anschluss Z (wird in Figur 2 näher beschrieben) kommende zweite Druckmittelleitung 16 angeschlossen. Über diese Anschlüsse K,Z kann jede der beiden Druckmittelleitungen 20, 16 jeweils mit einer Pumpe oder dem Druckmittelbehälter verbunden werden. Im Bereich des kolbenseitigen Zylinderraums 14 ist bei nahezu abgesenktem Kolben 11 ein Anschluss eines Zweiges 18 einer als Umlaufverbindung dienenden Verbindungsleitung 18,19 angeordnet, die einerseits mit dem kolbenstangenseitigen Zylinderraum 13 und andererseits mit dem kolbenseitigen Zylinderraum 14 verbunden ist. Zwischen den beiden Zweigen 18 und 19 der Verbindungsleitung 18, 19 ist eine zweite Ventileinrichtung 22 angeordnet.

Des weiteren sind in der Druckmittelleitung 20 und in der zweiten Druckmittelleitung 16 als gesonderte Bauteile 123 ausgebildete erste und zweite Rückschlagventile 29, 30 angeordnet sowie eine als fest eingestellte Drossel ausgebildetete Blende 34.

In der ersten Druckmittelleitung 20 ist die als Vierwege-Zweipositionsventil 32 ausgebildete erste Ventileinrichtung angeordnet, welches die erste Druckmittelleitung 20 in zwei Abschnitte teilt, nämlich einen Abschnitt 23 zwischen der ersten Ventileinrichtung 32 und dem Anschluss K und einem Abschnitt zwischen der ersten Ventileinrichtung 32 und dem Zylinderraum 14. Die beiden Druckmittelleitungen 20, 16 sind so an das beschaltet, dass nur jeweils eine Leitung mit der Pumpe und die andere Leitung mit dem Druckbehälter oder umgekehrt hydraulisch verbunden sind.

In der ersten Druckmittelleitung ist eine als Drossel 36 ausgebildete Blende angeordnet. Ausserdem ist zwischen der ersten Ventileinrichtung 32 und dem kolbenstangenseitigen Zylinderraum 13 eine erste Blende 31 in Serienschaltung mit der als Rückschlagventil ausgebildeten zweiten Ventileinrichtung 22 in Reihe geschaltet, wobei das Rückschlagventil 22 in Richtung auf den Hubzylinder 10 schliesst. Die Drucksteuereinrichtung 33 des Vierwege-Zweipositionsventils 32 ist an die zweite Druckmittelleitung 16 zwischen den kolbenstangenseitigen Zylinderraum 13 und der den beiden zweiten Rückschlagventilen 29, 30 nachgeordneten, als Drossel ausgebildeten zweiten Blende 34 angeschlossen. Ausserdem weist die erste Ventileinrichtung 32 noch folgende Drucksteuereinrichtungen auf:
Die erste Drucksteuereinrichtung 25, die zwischen der ersten Ventileinrichtung 22 und dem Anschluss K an die erste Druckmittelleitung 20 angeschlossen ist; die zweite Drucksteuereinrichtung 26, die zwischen der ersten Ventileinrichtung 32 und dem kolbenseitigen Zylinderraum 14 mit dem zweiten Zweig 18 der Verbindungsleitung 18,19 verbunden ist, sowie eine dritte Drucksteuereinrichtung 35, die mit dem Zweig 19 der Verbindungsleitung 18, 19 zum kolbenstangenseitigen Zylinderraum 13 verbunden ist. Die erste Ventileinrichtung 32 ist durch eine Feder 52 in Sperrrichtung federbelastet. In gleicher Richtung wirkt die dritte Drucksteuereinrichtung 35. Die erste und zweite Drucksteuereinrichtung 25, 26 wirkt entgegen der Kraft der Feder.

Das Vierwege-Zweipositionsventil 32 weist in seiner (gezeichneten) Schliesslage auf der dem Hubzylinder 10 abgewandten Seite zwei miteinander verbundene Leitungen 61, 62 auf, die an die erste Druckmittelleitung 20 angeschlossen sind. Die beiden Wege 66, 67 sind an die beiden Zweige 19, 18 der Verbindungsleitung 18, 19 angeschlossen. In den an den ersten Zweig 19 der Verbindungsleitung angeschlossenen ersten Weg 66 ist ein hydraulisch entsperrbar ausgebildetes, in Richtung auf den Hubzylinder 10 hin öffnendes Rückschlagventil 65 angeordnet, das an die Drucksteuerleitung 33 angeschlossen ist. Der zweite, an den weiteren Zweig 18 der Verbindungsleitung 18, 19 angeschlossene Weg 67 ist unterbrochen.

In der (nicht gezeigten) Öffnungslage des Vierwege-Zweipositionsventils 32 ist dessen an den ersten Zweig 19 der Verbindungsleitung 18,19 angeschlossener erster Weg mit einem in Richtung auf den Hubzylinder 10 öffnenden Rückschlagventil 68 versehen und dessen zweiter Weg als Durchgangsleitung 69 ausgebildet.

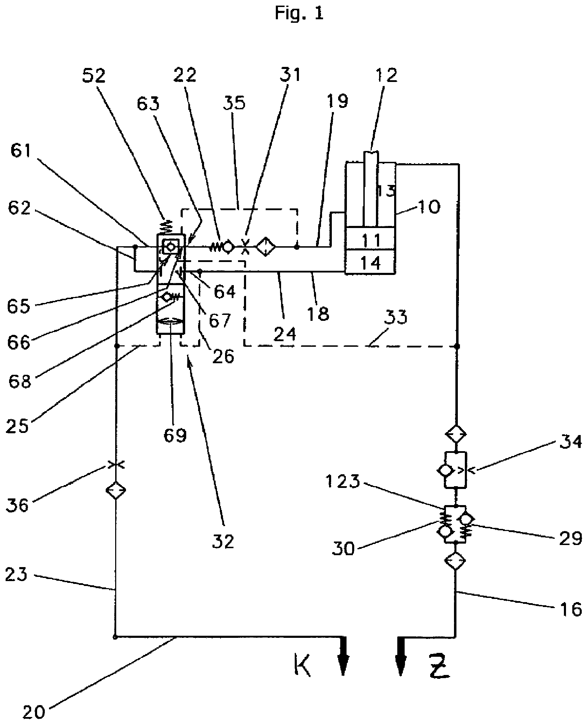

Beim Kippen des Fahrerhauses von der in Figur 1 gezeigten Lage muss die erste Druckmittelleitung 20 mit dem Pumpendruck beaufschlagt werden. Nachdem in der gezeichneten Lage weder über den nicht durchgehenden zweiten Weg 67, noch durch das Rückschlagventil 22 in dem ersten Zweig 19 der Verbindungsleitung 18, 19 Hydraulikflüssigkeit durchfliessen kann, baut sich in der als Steuerleitung ausgebildeten ersten Drucksteuereinrichtung 25 der Pumpendruck auf und verschiebt das Vierwege-Zweipositionsventil in die nicht in Figur 1 gezeigte Lage, in der über die Leitung 62 und die durchgehende Leitung 69 über den weiteren Zweig 18 der Verbindungsleitung 18, 19 Hydraulikflüssigkeit zu dem kolbenseitigen Zylinderraum 14 des Hubzylinders 10 gelangen kann. Infolgedessen wird der Kolben 11 ausgefahren.

Zum Zurückkippen des Fahrerhauses wird die Druckmittelleitung 16 und damit der kolbenstangenseitige Zylinderraum 13 mit Druck beaufschlagt, so dass sich der Kolben von der ausgefahrenen Lage in Richtung eingefahrene Lage bewegt. Über die Drucksteuerleitung 33 wird das hydraulisch entsperrbare Rückschlagventil in der ersten Ventileinrichtung 32 entsperrt, so dass über den ersten Zweig 19 der Verbindung der Leitung 18, 19 die Hydraulikflüssigkeit über die Drossel 31 kontrolliert abfliessen kann. Wenn der Kolben 11 den -oberen- Zweig 19 der Verbindungsleitung 18, 19 überfahren hat, wird die Hydraulikflüssigkeit in dem kolbenseiten Zylinderraum 14, da diese nicht über den Zweig 18 der Verbindungsleitung 18, 19 zum Tank abfliessen kann, erhöht, bis über die als zweite Druckmittelleitung ausgebildete zweite Drucksteuereinrichtung 26 der Schaltdruck entgegen der Kraftfeder 52 auf die erste Ventileinrichtung so gross wird, dass das Ventil von der in Figur 1 gezeigten Lage in die nicht gezeigte Lage umschaltet. In dieser Lage kann durch den Zweig 19 keine Hydraulikflüssigkeit mehr abfliessen. Dies kann aber ungehindert durch die durchgehende Leitung 69 als Zweitweg in der zweiten Position des Vierwege-Zweipositionsventils geschehen. Bei kleinsten Bewegungen des Kolbens 11 zwischen den beiden Anschlüssen der Zweige 18, 19 der als Umlaufverbindung wirkenden Verbindungsleitung 18,19 schaltet das Ventil bei kleinsten Hüben im Sinne eines hydraulischem Schwinghubes um und verdrängt hierbei weitere Druckflüssigkeit aus dem Zylinder, so dass dieser zwischen den Anschlüssen der Verbindungsleitung 18, 19 ungehindert schwingen kann. Hierbei wirkt die Beschaltung der ersten Ventileinrichtung 32 auch als Nachsaugeverhinderer, der es nicht zulässt, dass bei Hüben des Kolbens 11 aus dem Tank Hydraulikflüssigkeit nachgesaugt wird.

Die Blende 36 dient in der letzten Phase des Abwärtshubes des Kolbens 11 dazu, die Geschwindigkeit, mit der der Kolben in das -nicht gezeigte- Verriegelungsschloss fällt, beschränkt wird.

Wie eingangs schon erwähnt, wird die Fahrerhauskippvorrichtung gemäss Figur 1 von der Schaltung nach Figur 2 angetrieben, weshalb zu diesem Zweck die Anschlüsse K und Z Jeweils miteinander verbunden sind. Diese weist einen Druckmittelbehälter 40 und einen beim wiedergegeben Ausführungsbeispiel als Elekrtomotor ausgebildeten Antriebsmotor 41 auf, der die reversierbare und verstellbare Radialkolbenpumpe 42 antreibt. Deren ester Anschluss 43 wirkt in der in Figur 2 dargestellten Lage als Druckanschluss, der über ein erstes Dreiwege-Zweipositionsventil 451 an den Anschluss K angeschlossen ist, wohingegen der Anschluss Z über ein zweites Dreiwege-Zweipositionsventil 452 mit dem als Sauganschluss wirkenden zweiten Anschluss 44 verbunden ist. Beide nämlich der erste und der zweite Anschluss 43 und 44 sind über je ein zu dem Druckmittelbehälter 40 schliessenden Rückschlagventil 46,47 mit diesem (40) verbunden.

Der eine Weg jedes Ventils 451 und 452 ist jeweils nur mit dem Anschluss K oder Z und die beiden anderen Wege sind entweder mit dem ersten (43) bzw. zweiten Anschluss 44 der Radialkolbenpumpe 42 oder aber mit einer zu dem Druckmittelbehälter 40 führenden Leitung 453 bzw. 454 verbunden. Dabei sind die Dreiwege-Zweipositionsventil 451 und 452 stets so geschaltet, dass das mit dem Druckanschluss 43 verbundene (451) zu dem Anschluss K und damit der ersten Druckmittelleitung 20 duchgeschaltet ist, während das andere (452) mit seinem Sauganschluss 44 über das Rückschlagventil 47 Hydraulikflüssigkeit aus dem Druckmittelbehälter 40 ansaugt und umgekehrt. Diese Beschaltung kann beispielsweise mit einer Drucksteuerleitung 48 bzw. 49 sichergestellt werden.

Jede Stelleinheit 50a und 50b weist einen ersten bzw. zweiten Steueranschluss 504, 503 auf, der mit je einem der den Kolben 501 und 502 zugeordneten Kolbenräume sowie dem ersten Anschluss 43 bzw. 44 der Pumpe 42 verbunden ist.

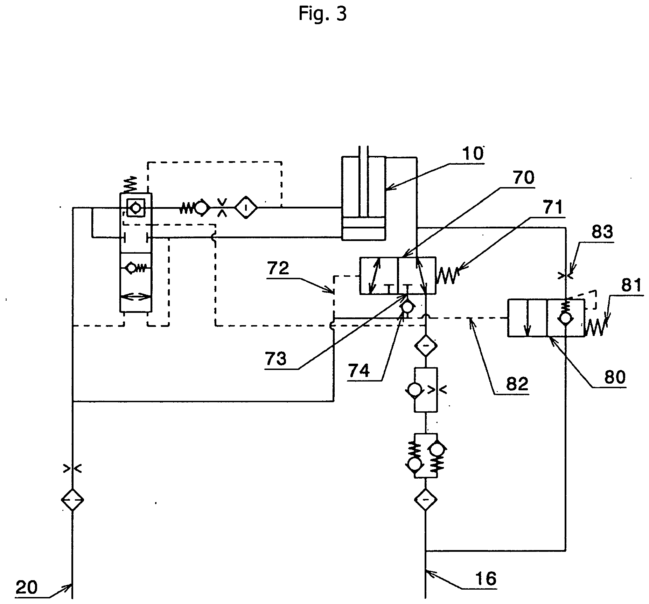

Wie in Figur 3 gezeigt, ist in die zweite Druckmittelleitung 16 ein druckgesteuertes Dreiwege-Zweipositionsventil 70 eingeschaltet, bei dem in der mit der Kraft einer Feder 71 bewirkten, der Fahrstellung entsprechenden Ruhelage die an seinem Eingang anliegende zweite Druckmittelleitung 16 durchschaltet ist. In seiner der Montagestellung entsprechenden Betriebslage (in Figur 3 nicht gezeigt) wird bei Beaufschlagung der ersten Druckmittelleitung 20 mit Druck die erste Druckmittelleitung 20 mit der zweiten Druckmittelleitung 16 über eine an seinem Ausgang befindliche Anschlussleitung verbunden und zugleich auch deren Verbindung zu dem Druckmittelbehälter unterbrochen. Zum Schalten in die Betriebslage weist das druckgesteuerte Dreiwege-Zweipositionsventil 70 eine an die erste Druckmittelleitung 20 angeschlossene und entgegen der Kraft der Feder 71 entgegenwirkende vierte Drucksteuereinrichtung 72 auf. Mit dieser Ausbildung wird eine so genannte Differentialschaltung bewirkt, in der der kolben- und der -stangenseitige Zylinderraum 14 bzw. 13 miteinander und zugleich mit der Pumpe verbunden sind, was zur Folge hat, dass die aus dem kolbenstangenseitigen Zylinderraum 13 verdrängte Hydraulikflüssigkeit wieder dem kolbenseitigen Zylinderraum 14 wieder zugeführt wird. Hierdurch erzielt man bei gleichem Volumenstrom der Pumpe eine höhere Stellgeschwindigkeit, muss dafür jedoch ein höheres Druckniveau bzw. eine verringerte verfügbare Kraft in Kauf nehmen.

In der an seinem Ausgang befindliche Anschlussleitung 73 des Dreiwege-Zweipositionsventils 70 ist zu der ersten Druckmittelleitung 20 hin ein zu dieser hin schliessendes viertes Rückschlagventil 74 vorgesehen.

Am Eingang des Dreiwege-Zweipositionsventils 70 ist ein mit seinem Eingang an die zweite Druckmittelleitung 16 und seinem Ausgang an den Druckmittelbehälter 40 (Figur 2) angeschlossenes druckgesteuertes Zweiwege-Zweipositionsventil 80 vorgesehen, das in seiner Ruhelage die Verbindung der zweiten Druckmittelleitung 16 mit dem Druckmittelbehälter 40 unterbricht und in der Betriebslage durchschaltet. Zum Schalten in die Betriebslage weist das druckgesteuerte Zweiwege-Zweipositionsventil 80 eine an die erste Druckmittelleitung 20 angeschlossene, seiner die Ruhelage haltende Federlast 80 entgegenwirkende fünfte Drucksteuereinrichtung 82 auf. Diese und die Kraft der Feder 81 sind so dimensioniert, dass das druckgesteuerte Zweiwege-Zweipositionsventil 80 erst bei einem bestimmten Druck in der an die Pumpe 42 angeschlossenen ersten Druckmittelleitung 20 schaltet und dabei die Differentialschaltung, bspw. zu einem Zeitpunkt unterbricht, in welchem kein grosser Volumenfluss mit schnellem Ausfahren der Kolbenstange 12, sondern eine grössere Kraft beim Kippen des Fahrerhauses erzielt wird.

Ferner ist zwischen dem Eingang des Zweiwege-Zweipositionsventils 80 und der zu dem kolbenstangenseitigen Zylinderraum 13 des doppelt wirkenden Hubzylinders 10 führenden zweiten Druckmittelleitung 16 eine Blende 83 angeordnet.

## Patentansprüche

1. Hydraulische Kippvorrichtung zum Kippen des Fahrerhauses eines Lastkraftwagens in eine gekippte Montagestellung und zum Zurückkippen in die Fahrstellung, mit einer Pumpe, mit einem Druckmittelbehälter (40) für die Hydraulikflüssigkeit, mit einem doppelt wirkenden Hubzylinder (10), dessen Kolben (11) und Zylindergehäuse jeweils mit dem Fahrerhaus bzw. mit dem Fahrgestell des Lastkraftwagens verbindbar sind, mit zumindest einem Steuerventil, durch das die beiden durch den Kolben getrennten Zylinderräume (13, 14) des Hubzylinders über Druckmittelleitungen (20, 16) wahlweise an die Pumpe oder an den Druckmittelbehälter anschliessbar sind, wobei die beiden Zylinderräume im Bereich der der Fahrstellung entsprechenden Lage des Kolbens über eine Verbindungsleitung (18,19) miteinander verbunden sind, deren Mündungen den Bereich des Spiels des Kolbens in der Fahrstellung definieren, und wobei der kolbenseitige Zylinderraum (14) über eine zu diesem hin öffnende, in der ersten Druckmittelleitung (20) eingeschaltete, von der zweiten Druckmittelleitung (16) über eine Drucksteuereinrichtung (33) druckgesteuerte erste Ventileinrichtung (32) mit dem zumindest einen Steuerventil verbunden ist, mit einer zweiten Ventileinrichtung (22) in der Verbindungsleitung (18,19), die bei Druckbeaufschlagung über den ersten Zweig (19) der Verbindungsleitung (18,19), der mit dem kolbenstangenseitigen Zylinderraum (13) verbunden ist, öffnet und in der Gegenrichtung schliesst, wobei die zweite Ventileinrichtung (22) als erstes Rückschlagventil ausgebildet ist, wobei die erste Ventileinrichtung (32) als Vierwege-Zweipositionsventil (32) ausgebildet ist, welches in Schliessrichtung mit der Kraft einer Feder (52) beaufschlagt ist und neben der Drucksteuereinrichtung (33) zwei weitere Drucksteuereinrichtungen (25, 26) zum Öffnen und eine dritte Drucksteuereinrichtung (35) zum Schliessen aufweist, wobei die erste Drucksteuereinrichtung (25) mit dem Abschnitt (23) der ersten Druckmittelleitung (20) zwischen der ersten Ventileinrichtung (32) und dem zumindest einen Steuerventil verbunden ist und wobei die zweite Drucksteuereinrichtung (26) mit dem Abschnitt (24) der ersten Druckmittelleitung (20) zwischen der ersten Ventileinrichtung (32) und dem kolbenseitigen Zylinderraum (14) und die weitere dritte Drucksteuereinrichtung (35) mit dem zweiten Zweig (19) der Verbindungsleitung (18,19) zum kolbenstangenseitigen Zylinderraum (13) verbunden ist, **dadurch gekennzeichnet, dass** in die zweite Druckmittelleitung (16) ein druckgesteuertes Dreiwege-Zweipositionsventil (70) eingeschaltet ist, das in seiner der Fahrstellung entsprechenden Ruhelage (Figur 3) die an seinem an dem kolbenstangenseitigen Zylinderraum (13) liegenden Eingang anliegende zweite Druckmittelleitung (16) durchschaltet und in seiner der Montagestellung entsprechenden Betriebslage bei Beaufschlagung der ersten Druckmittelleitung (20) mit Druck sowohl die erste Druckmittelleitung (20) mit der zweiten Druckmittelleitung (16) über eine an seinem Ausgang befindliche Anschlussleitung (73) verbindet als auch die Verbindung der zweiten Druckmittelleitung (16) zu dem Druckmittelbehälter (40) unterbricht.

2. Kippvorrichtung nach Anspruch 1, **dadurch gekennzeichnet, dass** das druckgesteuerte Dreiwege-Zweipositionsventil (70) zum Schalten in die Betriebslage eine an die erste Druckmittelleitung (20) angeschlossene, der der mit der Kraft einer Feder (71) bewirkten Ruhelage (Fig.3) entgegenwirkende vierte Drucksteuereinrichtung (72) aufweist.

3. Kippvorrichtung nach einem der vorhergehenden Ansprüche, **dadurch gekennzeichnet, dass** in der an seinem Ausgang befindliche Anschlussleitung (73) des Dreiwege-Zweipositionsventils (70) zu der ersten Druckmittelleitung (20) ein zu diesem hin schliessendes viertes Rückschlagventil (74) vorgesehen ist.

4. Kippvorrichtung nach einem der vorhergehenden Ansprüche, **dadurch gekennzeichnet, dass** an dem Eingang des Dreiwege-Zweipositionsventils (70) ein mit seinem Eingang an die zweite Druckmittelleitung (16) und seinem Ausgang an den Druckmittelbehälter (40) angeschlossenes druckgesteuertes Zweiwege-Zweipositionsventil (80) vorgesehen ist, das in seiner Ruhelage die Verbindung der zweiten Druckmittelleitung (16) mit dem Druckmittelbehälter (40) unterbricht und in Betriebslage durchschaltet.

5. Kippvorrichtung nach Anspruch 4, **dadurch gekennzeichnet, dass** das druckgesteuerte Zweiwege-Zweipositionsventil (80) zum Schalten in die Betriebslage eine an die erste Druckmittelleitung (20) angeschlossene, die eine seiner mit der Kraft einer Feder gehaltenen Ruhelage entgegenwirkende fünfte Drucksteuereinrichtung (82) aufweist.

6. Kippvorrichtung nach Anspruch 4 oder 5, **dadurch gekennzeichnet, dass** zwischen dem Eingang des Zweiwege-Zweipositionsventils (80) und der zu dem kolbenstangenseitigen Zylinderraum (13) des doppelt wirkenden Hubzylinders (10) führenden zweiten Druckmittelleitung (16) eine Blende (83) angeordnet ist.

## Claims

1. Hydraulic tilting device for tilting the cab of a heavy goods vehicle into a tilted mounting position and for tilting back into the driving position, having a pump; having a pressure medium reservoir (40) for the hydraulic fluid; having a double-acting stroke cylinder (10), the piston (11) and cylinder housing of which are connectible to the cab and to the chassis of the heavy goods vehicle, respectively; having at least one control valve by which the two cylinder chambers (13, 14) of the stroke cylinder, which are separated by the piston, are connectible via pressure medium lines (20, 16) selectively to the pump or to the pressure medium reservoir, wherein, in the region of the piston position corresponding to the driving position, the two cylinder chambers are connected to one another via a connecting line (18, 19), the mouths of which define the range of play of the piston in the driving position, and wherein the piston-side cylinder chamber (14) is connected to the at least one control valve via a first valve device (32) which opens towards the piston-side cylinder chamber, is installed in the first pressure medium line (20) and is pressure-controlled by the second pressure medium line (16) via a pressure control device (33); having in the connecting line (18, 19) a second valve device (22) which opens on application of pressure via the first branch (19) of the connecting line (18, 19), which branch is connected to the piston-rod-side cylinder chamber (13), and closes in the opposite direction, the second valve device (22) being in the form of a first non-return valve, wherein the first valve device (32) is in the form of a four-way two-position valve (32) which is urged into the closed position by the force of a spring (52) and has, in addition to the pressure control device (33), two further pressure control devices (25, 26) for opening and a third pressure control device (35) for closing, the first pressure control device (25) being connected to the section (23) of the first pressure medium line (20) between the first valve device (32) and the at least one control valve, and the second pressure control device (26) being connected to the section (24) of the first pressure medium line (20) between the first valve device (32) and the piston-side cylinder chamber (14), and the further third pressure control device (35) being connected to the second branch (19) of the connecting line (18, 19) leading to the piston-rod-side cylinder chamber (13), **characterised in that** in the second pressure medium line (16) there is installed a pressure-controlled three-way two-position valve (70) which in its rest position (Figure 3), corresponding to the driving position, enables the connection of the second pressure medium line (16) applied to its input that is applied to the piston-rod-side cylinder chamber (13), and in its operating position, corresponding to the mounting position, on application of pressure to the first pressure medium line (20) both connects the first pressure medium line (20) to the second pressure medium line (16) via a connection line (73) located at its output and interrupts the connection of the second pressure medium line (16) to the pressure medium reservoir (40).

2. Tilting device according to claim 1, **characterised in that** for switching into the operating position, the pressure-controlled three-way two-position valve (70) has a fourth pressure control device (72) which is connected to the first pressure medium line (20) and acts against the rest position (Fig. 3) brought about by the force of a spring (71).

3. Tilting device according to either one of the preceding claims, **characterised in that** in the connection line (73) of the three-way two-position valve (70), which connection line is located at the valve's outlet and leads to the first pressure medium line (20), there is a provided a fourth non-return valve (74) which closes towards that three-way two-position valve.

4. Tilting device according to any one of the preceding claims, **characterised in that** at the input of the three-way two-position valve (70) there is provided a pressure-controlled two-way two-position valve (80) which is connected by its input to the second pressure medium line (16) and by its output to the pressure medium reservoir (40) and which, in its rest position, interrupts the connection between the second pressure medium line (16) and the pressure medium reservoir (40) and, in the operating position, enables that connection.

5. Tilting device according to claim 4, **characterised in that**, for switching into the operating position, the pressure-controlled two-way two-position valve (80) has a fifth pressure control device (82) which is connected to the first pressure medium line (20) and acts against the rest position maintained by the force of a spring.

6. Tilting device according to claim 4 or 5, **characterised in that** a baffle (83) is arranged between the input of the two-way two-position valve (80) and the second pressure medium line (16) leading to the piston-rod-side cylinder chamber (13) of the double-acting stroke cylinder (10).

## Revendications

1. Dispositif hydraulique de basculement conçu pour faire basculer la cabine du conducteur d'un poids lourd vers une position basculée de montage, et pour lui imprimer un basculement rétrograde vers la position de déplacement, comprenant une pompe ; un réservoir (40) de fluide pressurisé, dédié au fluide hydraulique ; un vérin de levage (10) à double action, dont le piston (11) et le carter cylindrique peuvent être reliés, respectivement, à la cabine du conducteur et au châssis de roulement du poids lourd ; au moins une vanne de commande par laquelle les deux chambres cylindriques (13, 14) dudit vérin de levage, séparées par ledit piston, peuvent être sélectivement raccordées à la pompe ou au réservoir de fluide pressurisé, par l'intermédiaire de conduits (20, 16) à fluide pressurisé, sachant que les deux chambres cylindriques sont reliées l'une à l'autre, dans la région de la position du piston correspondant à la position de déplacement, par l'intermédiaire d'un conduit de jonction (18, 19) dont les embouchures définissent la plage du jeu dudit piston dans ladite position de déplacement, et sachant que la chambre cylindrique (14) située côté piston est reliée à la vanne de commande, à présence minimale, par l'intermédiaire d'un premier dispositif de distribution (32) qui s'ouvre en direction de ladite chambre, est intégré dans le premier conduit (20) à fluide pressurisé, et dont la pression est pilotée par le second conduit (16) à fluide pressurisé, par l'intermédiaire d'un dispositif (33) de commande de pression ; un second dispositif de distribution (22) logé dans le conduit de jonction (18, 19), qui s'ouvre en cas de sollicitation à la pression par l'intermédiaire du premier embranchement (19) dudit conduit de jonction (18, 19), relié à la chambre cylindrique (13) située côté tige du piston, et se ferme dans la direction opposée, lequel second dispositif de distribution (22) est réalisé en tant que premier clapet antiretour, le premier dispositif de distribution (32) étant réalisé sous la forme d'une vanne (32) à quatre voies et deux positions, sollicitée dans le sens de fermeture par la force d'un ressort (52) et incluant, outre le dispositif (33) de commande de pression, deux dispositifs additionnels (25, 26) de commande de pression, affectés à l'ouverture, et un troisième dispositif (35) de commande de pression, affecté à la fermeture, sachant que le premier dispositif (25) de commande de pression est relié au tronçon (23) du premier conduit (20) à fluide pressurisé interposé entre le premier dispositif de distribution (32) et la vanne de commande à présence minimale, et sachant que le deuxième dispositif (26) de commande de pression est relié au tronçon (24) dudit premier conduit (20) à fluide pressurisé interposé entre ledit premier dispositif de distribution (32) et la chambre cylindrique (14) située côté piston, le troisième dispositif additionnel (35) de commande de pression étant relié au premier embranchement (19) dudit conduit de jonction (18, 19) menant à la chambre cylindrique (13) située côté tige du piston, **caractérisé par le fait qu'**une vanne (70) à trois voies et à deux positions, à pilotage de pression, est intégrée dans le second conduit (16) à fluide pressurisé et provoque, dans sa position de repos (figure 3) correspondant à la position de déplacement, une mise en communication directe dudit second conduit (16) à fluide pressurisé, adjacent à son entrée pointant vers la chambre cylindrique (13) située côté tige du piston, ladite vanne provoquant dans sa position de fonctionnement correspondant à la position de montage, en cas de sollicitation à la pression du premier conduit (20) à fluide pressurisé, à la fois une jonction entre ledit premier conduit (20) à fluide pressurisé et ledit second conduit (16) à fluide pressurisé, instaurée par l'intermédiaire d'un conduit de raccordement (73) situé à sa sortie, et une interruption de la jonction entre ledit second conduit (16) à fluide pressurisé et le réservoir (40) de fluide pressurisé.

2. Dispositif de basculement selon la revendication 1, **caractérisé par le fait que** la vanne (70) à trois voies, à deux positions et à pilotage de pression comporte, en vue de la commutation à la position de fonctionnement, un quatrième dispositif (72) de commande de pression qui est raccordé au premier conduit (20) à fluide pressurisé, et qui agit à l'encontre de la position de repos (figure 3) provoquée par la force d'un ressort (71).

3. Dispositif de basculement selon l'une des revendications précédentes, **caractérisé par le fait qu'**un quatrième clapet antiretour (74), prévu dans le conduit de raccordement (73) associé au premier conduit (20) à fluide pressurisé et situé à la sortie de la vanne (70) à trois voies et à deux positions, se ferme en direction de ladite vanne.

4. Dispositif de basculement selon l'une des revendications précédentes, **caractérisé par le fait qu'**une vanne (80) à deux voies, à deux positions et à pilotage de pression, prévue à l'entrée de la vanne (70) à trois voies et à deux positions et raccordée par son entrée au second conduit (16) à fluide pressurisé, et par sa sortie au réservoir (40) de fluide pressurisé, interrompt la jonction entre ledit second conduit (16) à fluide pressurisé et ledit réservoir (40) de fluide pressurisé, dans sa position de repos, et provoque une commutation directe à la position de fonctionnement.

5. Dispositif de basculement selon la revendication 4, **caractérisé par le fait que** la vanne (80) à deux voies, à deux positions et à pilotage de pression comporte, en vue de la commutation à la position de fonctionnement, un cinquième dispositif (82) de commande de pression qui est raccordé au premier conduit (20) à fluide pressurisé, et agit à l'encontre d'une position de repos entretenue par la force d'un ressort.

6. Dispositif de basculement selon la revendication 4 ou 5, **caractérisé par le fait qu'**un diaphragme (83) est interposé entre l'entrée de la vanne (80) à deux voies et à deux positions et le second conduit (16) à fluide pressurisé menant à la chambre cylindrique (13) du vérin de levage (10) à double action, qui est située côté tige du piston.
